# EUROPEAN PATENT SPECIFICATION

(11) **EP 3 267 030 B1**
(45) Date of publication and mention of the grant of the patent: **08.01.2020**
(21) Application number: 16758417.6
(22) Date of filing: 19.01.2016
(51) Int. Cl.: F03B 13/14, F03D 9/00, F16H 25/20, F03B 15/00, F16H 19/04, F16H 31/00, G05B 11/01, F03D 15/10, F03D 9/25

(54) **WAVE-WIND MUTUALLY SUPPLEMENTING POWER SUPPLY SYSTEM FOR CONTINUOUS POWER GENERATION**
ERGÄNZENDES WIND-WELLEN STROMVERSORGUNGSSYSTEM ZUR KONTINUIERLICHEN STROMERZEUGUNG
SYSTÈME D'ALIMENTATION ÉLECTRIQUE HOULOMOTEUR-ÉOLIEN COMPLÉMENTAIRE POUR UNE PRODUCTION D'ÉNERGIE CONTINUE

(30) Priority: 05.03.2015 CN 201510097533
(43) Date of publication of application: 10.01.2018
(73) Proprietor: Weng, Wen-kai, Keelung City, Taiwan 202 (TW); Weng, Yuan-yu, Kaohsiung City, Taiwan 807 (TW); Chen, Chien-Jung, Taichung City, Taiwan 414 (TW)
(72) Inventor: Weng, Wen-kai, Keelung City, Taiwan 202 (TW); Weng, Yuan-yu, Kaohsiung City, Taiwan 807 (TW); Chen, Chien-Jung, Taichung City, Taiwan 414 (TW)
(74) Representative: Cabinet Chaillot
(86) International application number: PCT/CN2016/071354
(87) International publication number: WO 2016/138801

(56) References cited:
- EP-A2- 2 757 249
- WO-A1-2015/010440
- CN-A- 101 981 312
- CN-U- 203 614 313
- CN-U- 203 614 313
- US-A- 4 418 286
- US-A1- 2006 064 972
- US-A1- 2010 230 965
- US-A1- 2011 084 488
- US-A1- 2013 341 926

## Description

### Background of the invention

### 1. Field of the invention

The invention generally relates to power generation. More particularly, the invention relates a system in which sea wave power generation is combined with wind power generation to reach the goal of stable, continuous power generation.

### 2. Description of the prior art

Wind power generation has become quite common and humanity has used it for a long time. Technologies related to wind power generation has reached maturity; it is easy to install and has a low maintenance cost. Many countries have encouraged the use and installation of wind power generation facilities. However, wind power generation has its drawback - unstable. When winds are too weak, a generator can not be driven and power generation would be interrupted; when winds are too strong, power generation would also be interrupted because the whole system of wind power generation is forced to shut down to avoid mechanical damages that could be inflicted by the strong winds.

Another form of natural energy is sea waves, which propagate on the surface of a sea. When winds blow on the surface of a sea, air pressure and friction brought by the winds would transfer some energy from the winds to the surface.

In comparison to wind power generation, wave power generation has a greater potential and would not be frequently interrupted because seas cover 70% of the earth's surface and sea waves take place on a constant, long-term basis. Therefore, technologies related to wave power generation have gained attention.

Technologies related to wave power generation are relatively new and it takes a lot of money to build facilities of wave power generation. In addition, facilities of wave power generation may be built near or at the site where the facilities of wind power generation are located.

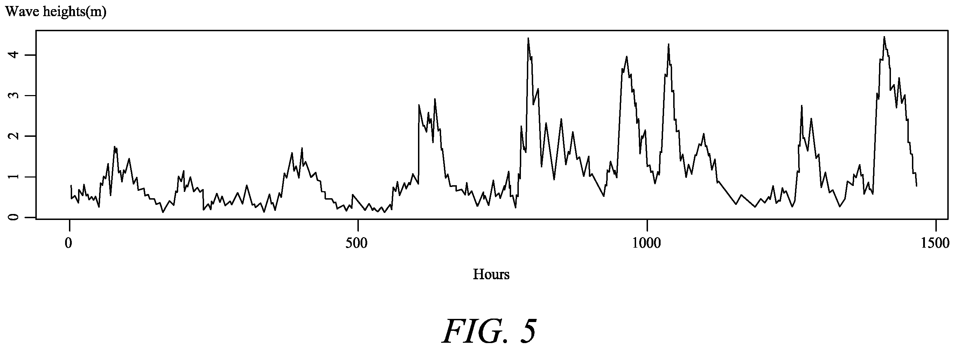

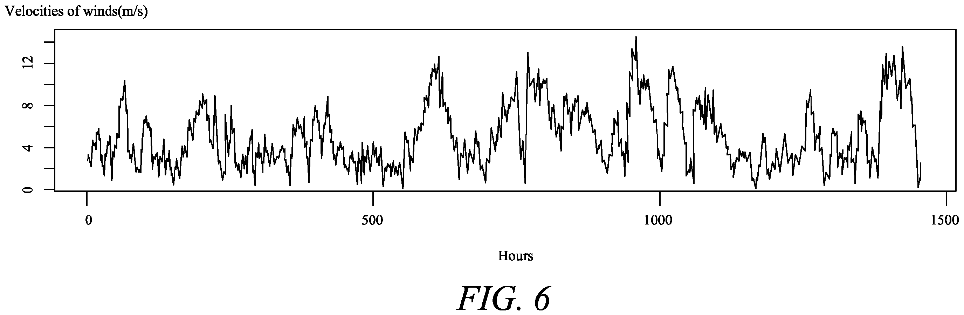

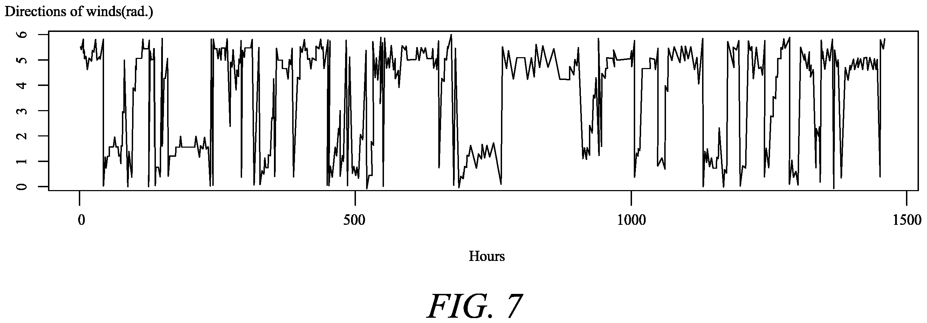

According to the relevant studies, either wind energy or wave energy varies in a cyclical manner and they have a correlation coefficient of 0.8; in addition, in comparison to wind energy, wave energy is more predictable. When winds or waves are too weak, they can not be used to generate electricity; when they are too strong, mechanical damages may be done to the facilities and facilities may be forced to shut down. With regard to wind power generation or wave power generation, there is a transitional period between the time facilities start to move and the time when stable power generation is reached. At any location of a sea, the transitional period of wind power generation is not numerically identical to the transitional period of wave power generation. If they can be made to complement each other, the goal of long-term power generation may be reached and a higher payoff may be attained. Figs. 5 to 7 illustrate how wave height, wind velocity and wind direction vary in the same 1,500-hour period (please see Prediction of wave height based on the monitoring of surface wind, Oceanography, 2012, page 169-188, by Tsukasa Hokimoto).

To come up with a system in which wave power generation may complement the existing wind power generation facilities, the inventor has put in a lot of effort in the subject and has successfully come up with the system of the present invention.

CN 203614313 U discloses a wave-wind mutually supplementing power supply system according to the preamble of claim 1.

### Summary of the invention

An object of the present invention is to provide a wave-wind mutually supplementing power supply system for continuous power generation to combine wave power generation with wind power generation and to reduce down times so as to achieve the goal of long-term continuous power generation and to provide an optimal natural energy harnessing option.

Another object of the present invention is to provide such system, in which wave power generation may be combined with wind power generation. The system is easy to install and maintain and has a lower cost. Therefore, the system would be a good option in solving the urgent energy shortage problem.

The wave-wind mutually supplementing power supply system of the present invention is as defined in claim 1 and has a wave kinetic energy module. The wave kinetic energy module is disposed on/in a sea and may generate electricity through the motion of sea water. The electricity so generated is combined with a wind power generation device to provide continuous power generation. The wave kinetic energy module comprises a wave energy harnessing unit, a transmission shaft, a generator unit, a torque adjusting unit and an automatic control unit. The wave energy harnessing unit may harness the kinetic energy generated through the motion of sea waves. The transmission shaft may transmit the kinetic energy harnessed by the wave energy harnessing unit to the generator unit and the generator unit may receive the kinetic energy transmitted from the transmission shaft and convert it to electricity. The torque adjusting unit is mounted on the transmission shaft so as to adjust the torque of the latter. The automatic control unit has a microprocessor and a sea water motion sensor unit so as to adjust the torque of the transmission shaft and control the activation of the generator unit according to the motion of the sea water.

Furthermore, the generator unit comprises two coaxially disposed generators with different wattages. When sea waves move in smaller amplitudes, the automatic control unit would only activate the generator with the lower wattage so as to achieve higher power generation efficiency at lower torques. When sea waves move in larger amplitudes, the automatic control unit would switch to activate the generator with the higher wattage so as to achieve higher power generation efficiency at higher torques. As sea waves move in even larger amplitudes, the automatic control unit would activate both of the two generators to reach the peak level of power generation.

In addition, the wave energy harnessing unit has a float unit. The float unit is connected with a central ball screw or a central toothed rod, which may move in sync with the float unit. The central ball screw is connected with a bevel gear, which engages with two one-directional bevel gear pieces, which rotate in opposite directions and are linked with the transmission shaft. In such manner, as the float unit moves up and down with the sea water, the central ball screw moves in sync with the float unit and then such vertical motion passed through the bevel gear to the two one-directional bevel gear pieces, which cause the transmission shaft to rotate in a single direction. Then, such rotation may drive the generator unit.

Preferably, both of the two generators of the generator unit are coreless disk type generators.

Preferably, one of the two generators is 200KW generator and the other is 300KW generator.

In actual operation, the 200KW generator is activated as wave heights are lower than 1.5 meters; the 300KW generator is activated as wave heights are between 1.5 and 3.0 meters; both of the two generators are activated as sea wave heights exceed 3.0 meters.

Preferably, the torque adjusting unit is a continuous torque varying device, which may adjust to vary rpm and torque. A torque meter is linked to the transmission shaft and may measure the torque values of the transmission shaft and pass the numerical values to the automatic control unit, which may in turn automatically adjust the rpm of the transmission shaft.

Moreover, the automatic control unit is provided with an electronic stabilizer, which is electrically linked with the torque adjusting unit and may stabilize the rpm of the torque adjusting unit when the motion of sea wave changes abruptly.

There are many types of the sea water motion sensor unit. Preferably, a sea water motion data collecting float unit is used to collect motion data of sea water.

Preferably, the sea water motion sensor unit is a linear displacement sensor, which may measure and record the vertical displacements of sea water.

Preferably, the sea water motion sensor unit may be an ultrasonic wave height meter or a laser wave height meter, which use ultrasonic or laser signals to measure the vertical displacements of sea water.

In comparison to the prior art, the system of the present invention may be used to provide long-term continuous power generation; in addition, the system is easy to install and maintain and has a lower cost. Therefore, the system would be a good option in solving the urgent energy shortage problem.

### Brief description of the drawings

Fig. 1 is a diagram schematically illustrating the system of the present invention.
Fig. 1a is a perspective view of the wave energy harnessing unit, which is provided with a ball screw.
Fig. 1b is a perspective view of the wave energy harnessing unit, which is provided with a toothed rod.
Fig. 2 is a view schematically illustrating how the wave kinetic energy module of the present invention is used with the facilities of wind power generation.
Fig. 3 is a diagram illustrating two generators with different wattages can harness a broader range of energy in the present invention.
Fig. 4 is a diagram illustrating a single generator may extract energy from a limited, narrower range of energy in the prior art.
Figs. 5 to 7 illustrate how wave height, wind velocity and wind direction vary in the same 1,500-hour period.

**List of reference numerals**

| | |
|---|---|
| 10 Wave kinetic energy module | 100 Wave energy harnessing unit |
| 101 Float unit | 102 Central ball screw |
| 1021 Nut portion | 1022 Body portion |
| 1023 Several connective rods | 103 Bevel gear/Cogwheel |
| 104 Two one-directional bevel gear pieces | 105 Central toothed rod |
| 110 Transmission shaft | 120 Generator unit |
| 130 Torque adjusting unit | 131 Continuous torque varying device |
| 140 Automatic control unit | 141 Microprocessor |
| 142 Sea water motion sensor unit | 1421 Sea water motion data collecting float unit |
| 1422 Linear displacement sensor | 1423 Ultrasonic wave height meter or laser wave height meter |
| 143 Torque meter | 144 Electronic stabilizer |
| 20 Wind power generation device | 30 Sea water |

### Detailed description of the preferred embodiment

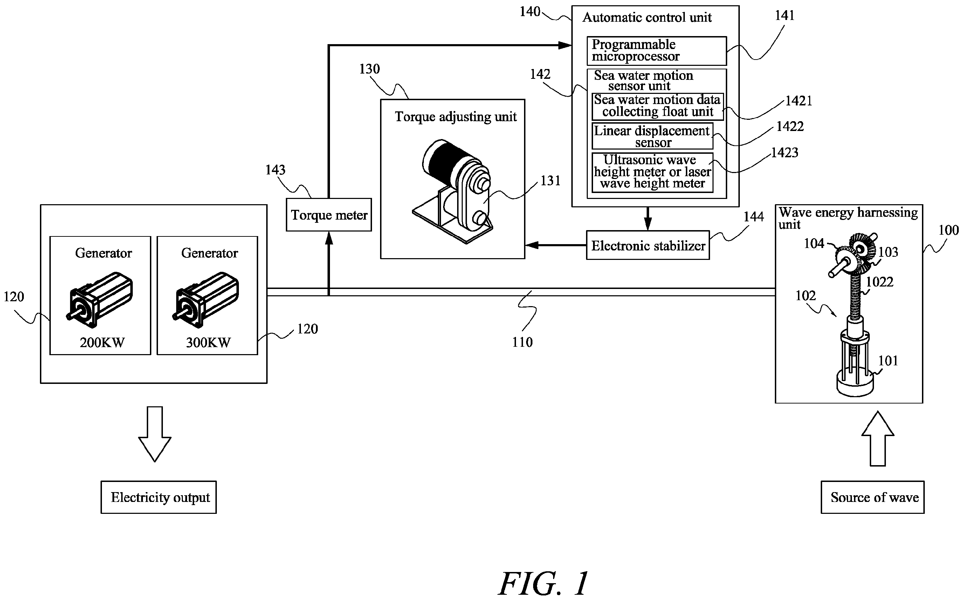

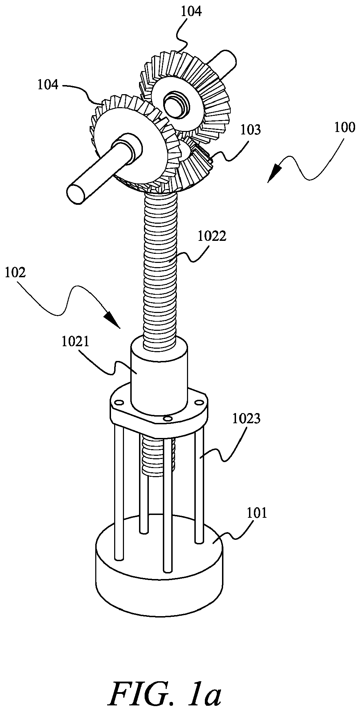

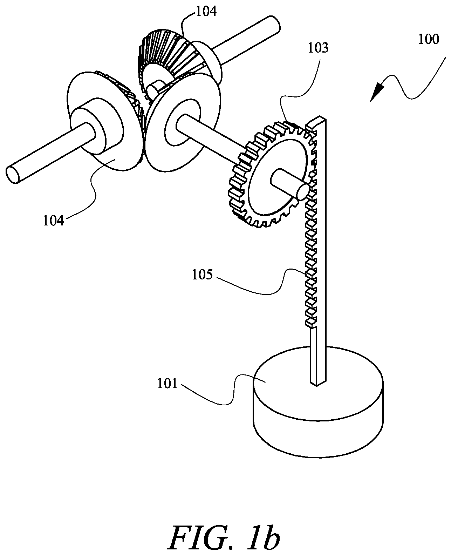

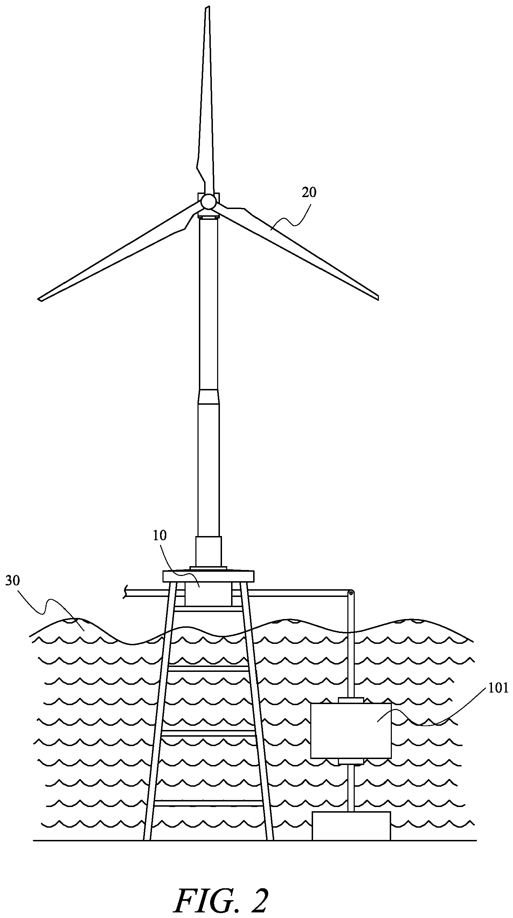

The wave-wind mutually supplementing power supply system of the present invention, as illustrated in Figs. 1 and 2, has a wave kinetic energy module 10. The wave kinetic energy module 10 is disposed on/in a sea and may generate electricity through the motion of sea water 30. The electricity so generated is combined with a wind power generation device 20 for continuous power generation. The wave kinetic energy module 10 may be installed at the same site where an existing wind power generation device 20 is disposed, hence sharing the same underwater cables and eliminating additional land acquisition cost and construction cost. Furthermore, electricity needed in after-installation periodic maintenance may be drawn from the existing wind power generation device 20.

The wave kinetic energy module 10 comprises a wave energy harnessing unit 100, a transmission shaft 110, a generator unit 120, a torque adjusting unit 130 and an automatic control unit 140.

The wave energy harnessing unit 100 is placed near the surface of a sea 30 to harness the kinetic energy generated through the motion of sea waves.

The transmission shaft 110 may transmit the kinetic energy generated by the wave energy harnessing unit 100 to the generator unit 120 so as to generate electricity.

The generator unit 120 may receive the kinetic energy transmitted from the transmission shaft 110 and convert it to electricity.

The torque adjusting unit 130 is mounted on the transmission shaft 110 so as to adjust the torque of the latter.

The automatic control unit 140 has a microprocessor 141 and a sea water motion sensor unit 142 so as to adjust the torque of the transmission shaft 110 and control the activation of the generator unit 120 according to the motion of the sea water 30.

In addition, the wave energy harnessing unit 100 has a float unit 101. The float unit 101 is submerged into a sea and may move in sync with the sea water 30 so as to extract the kinetic energy from the sea waves. The float unit 101 is connected with a central ball screw 102, which may move in sync with the float unit 101. The central ball screw 102 is connected with a bevel gear 103, which engages with two one-directional bevel gear pieces 104, which rotate in opposite directions and are linked with the transmission shaft 110. In such manner, as the float unit 101 moves up and down with the sea water 30, the central ball screw 102 moves in sync with the float unit 101 and then such vertical motion passes through the bevel gear 103 to the two one-directional bevel gear pieces 104, which cause the transmission shaft 110 to rotate in a single direction. Then, such rotation may drive the generator unit 120. Because the sea water 30 moves on a constant basis, the generator unit 120 can be driven on a constant basis. In addition, such power supply system is used with a wind power generation device 20 so as to improve and stabilize electricity output.

Now, please see Fig. 1a. The central ball screw 102 comprises a nut portion 1021 and a body portion 1022. The nut portion 1021 is connected with the float unit 101 via several connective rods 1023. The body portion 1022 is connected with the bevel gear 103. In such manner, the nut portion 1021 is driven by the float unit 101 and thus moves in a linear manner; the body portion 1022 and thus the bevel gear 103 may move in a rotational manner.

The reasons for the choice of the ball screw 102 are its higher levels of stability and strength, which may maximize the power generation efficiency. Alternatively, a toothed rod, as illustrated in Fig. 1b, may be used. In Fig. 1b, the float unit 101 is connected with a toothed rod 105, which may drive a cogwheel 103.

In either case, the two one-directional bevel gear pieces 104 are allowed to rotate in opposite directions. Therefore, it does not matter whether the float unit 101 moves upward or downward, one of the two one-directional bevel gear pieces 104 would be driven so as to achieve a higher efficiency.

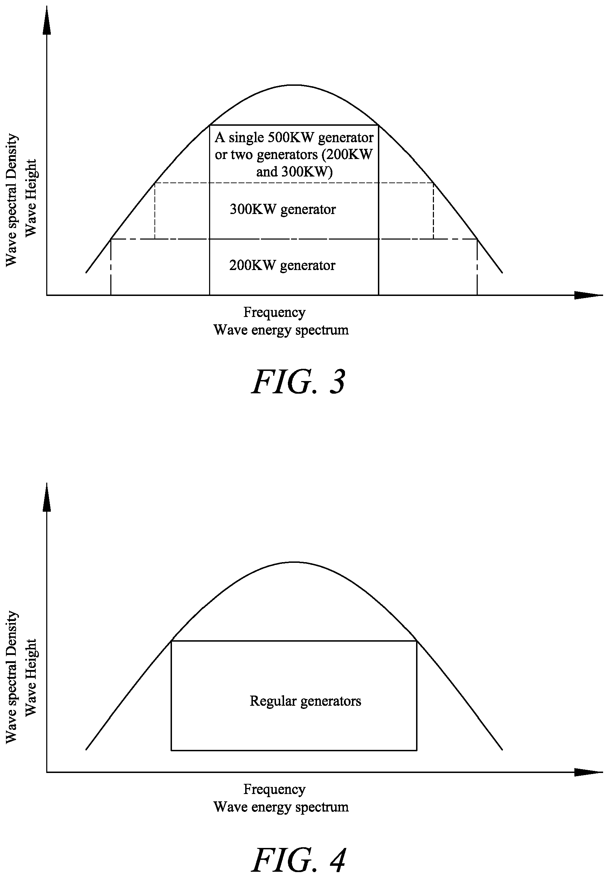

Please refer to Fig. 3 now. The generator unit 120 comprises two coaxially disposed generators: a 200KW generator and a 300KW generator. When wave height is less than 1.5 meters and sea waves move in smaller amplitudes, the automatic control unit 140 would only activate the 200KW generator so as to achieve higher power generation efficiency at lower torques. When wave height is between 1.5 meters and 3.0 meters and sea waves move in larger amplitudes, the automatic control unit 140 would switch to activate the 300KW generator so as to achieve higher power generation efficiency at higher torques. As wave height exceeds 3.0 meters and sea waves move in even larger amplitudes, the automatic control unit 140 would activate both of the 200KW and 300KW generators or optionally, activate a single 500KW generator.

Figs. 3 and 4 illustrate the wave energy spectrum and wave spectral density of sea waves. In the prior art, as illustrated in Fig. 4, a single generator extracts energy from a limited range of energy. In contrast, in the present invention, as illustrated in Fig. 3, the generator unit comprises two generators: a 200KW generator and a 300KW generator, which may be selectively activated by the automatic control unit 140 according to different wave heights. Therefore, by a simple inspection of Figs. 3 and 4, we can see that the generator unit of the present invention may extract more energy from sea waves.

Both of the two generators of the generator unit 120 may be coreless disk type generators to reduce wear and tear and lessen maintenance. Also, regular low-rpm generators may be used.

The torque adjusting unit 130 is a continuous torque varying device 131, which may adjust to vary rpm and torque. A torque meter 143 is mounted on the transmission shaft 110 and may measure the torque values of the transmission shaft 110 and pass the numerical values to the automatic control unit 140, which may in turn automatically adjust the rpm of the transmission shaft 110. The torque adjusting unit 130 may also be an rpm enhancing device.

The automatic control unit 140 is provided with an electronic stabilizer 144, which is electrically linked with the torque adjusting unit 130 and may stabilize the rpm of the torque adjusting unit 130 when the motion of sea waves changes abruptly.

There are many types of the sea water motion sensor unit 142 and one or several types of such sensors may be used. The sea water motion sensor unit 142 may be a sea water motion data collecting float unit 1421, which may be used to collect motion data of sea water 30.

Furthermore, the sea water motion sensor unit 142 may be a linear displacement sensor 1422, which may measure and record the vertical displacements of sea water 30.

Moreover, the sea water motion sensor unit 142 may be an ultrasonic wave height meter or a laser wave height meter 1423, which uses ultrasonic or laser signals to measure the vertical displacements of sea water 30.

Many changes and modifications in the above described embodiment of the invention can, of course, be carried out without departing from the scope thereof. Accordingly, to promote the progress in science and the useful arts, the invention is disclosed and is intended to be limited only by the scope of the appended claims.

## Claims

1. A wave-wind mutually supplementing power supply system for continuous power generation, comprising:
a wave kinetic energy module (10), which is disposed on/in a sea and is adapated to generate electricity through the motion of sea water (30), the electricity so generated being combined with a wind power generation device (20) for continuous power generation, and wherein:
the wave kinetic energy module (10) comprises a wave energy harnessing unit (100), a transmission shaft (110), a generator unit (120), a torque adjusting unit (130) and an automatic control unit (140), wherein the wave energy harnessing unit (100) is adapted to harness the kinetic energy generated through the motion of sea waves and the transmission shaft (110) is intended to transmit the kinetic energy harnessed by the wave energy harnessing unit (100) to the generator unit (120), and wherein the generator unit (120) is adapted to receive the kinetic energy transmitted from the transmission shaft (110) and convert it to electricity and the torque adjusting unit (130) is disposed on the transmission shaft (110) so as to adjust the torque of the latter, and wherein the automatic control unit (140) has a microprocessor (141) and a sea water motion sensor unit (142) so as to control the activation of the generator unit (120) and adjust the torque of the transmission shaft (110) according to the motion of the sea water;
**characterized in that** the generator unit (120) comprises two generators with different wattages, wherein when sea waves move in smaller amplitudes, the automatic control unit (140) would only activate the generator with the smaller wattage so as to achieve higher power generation efficiency at lower torques, and when sea waves move in larger amplitudes, the automatic control unit (140) would switch to activate the generator with the larger wattage so as to achieve higher power generation efficiency at higher torques, and as sea waves move in even larger amplitudes, the automatic control unit (140) would activate both of the two generators.

2. The system as in claim 1, wherein the wave energy harnessing unit (100) has a float unit (101), a central ball screw (102) or a central toothed rod (105), a bevel gear (103) and two one-directional bevel gear pieces (104), **characterized in that** the float unit (101) is connected with a central ball screw (102) or a central toothed rod (105) and the central ball screw (102) is connected with a bevel gear (103), which engages with and drives the two one-directional bevel gear pieces (104), and **characterized in that** the two one-directional bevel gear pieces (104) are linked with the transmission shaft (110) so that as the float unit (101) moves up and down with the sea water (30), the two one-directional bevel gear pieces (104) move in opposite directions, which cause the transmission shaft (110) to rotate in a single direction to drive the generator unit (120).

3. The system as in claim 1, wherein both of the two generators are coreless disk type generators.

4. The system as in claim 1, wherein the generator unit (120) comprises two generators with different wattages: a 200KW generator and a 300KW generator, **characterized in that** when sea wave height is less than 1.5 meters, the automatic control unit (140) would only activate the 200KW generator, and **characterized in that** when sea wave height is between 1.5 and 3.0 meters, the automatic control unit (140) would only activate the 300KW generator, and **characterized in that** as wave height exceeds 3.0 meters, the automatic control unit (140) would activate both of the 200KW and 300KW generators.

5. The system as in claim 1, wherein the torque adjusting unit (130) is a continuous torque varying device (131) or an rpm enhancing device, and wherein a torque meter (143) is mounted on the transmission shaft (110) and is adapted to measure the torque values of the transmission shaft (110) and pass the numerical values to the automatic control unit (140), which is adapted to in turn automatically adjust the rpm of the transmission shaft (110).

6. The system as in claim 5, wherein the automatic control unit (140) is provided with an electronic stabilizer (144), which is electrically linked with the torque adjusting unit (130) and adapted to stabilize the rpm of the torque adjusting unit (130).

7. The system as in claim 1, wherein the sea water motion sensor unit (142) is a sea water motion data collecting float unit (1421), which is adapted to collect motion data of sea water (30).

8. The system as in claim 1, wherein the sea water motion sensor unit (142) is a linear displacement sensor (1422), which is adapted to measure and record the vertical displacements of sea water (30).

9. The system as in claim 1, wherein the sea water motion sensor unit (142) is an ultrasonic wave height meter or a laser wave height meter (1423), which use ultrasonic or laser signals to measure the vertical displacements of sea water (30).

## Patentansprüche

1. Wellen-Wind-Ergänzungs-Stromversorgungssystem für eine kontinuierliche Stromerzeugung, Folgendes umfassend:
ein Wellenbewegungsenergie-Modul (10), das auf/in einem Meer angeordnet und dafür eingerichtet ist, durch die Bewegung des Meerwassers (30) Elektrizität zu erzeugen, wobei die so erzeugte Elektrizität mit einer Windkraftanlage (20) für eine kontinuierliche Stromerzeugung kombiniert ist und wobei:
das Wellenbewegungsenergie-Modul (10) eine Wellenenergie-Nutzbarmachungseinheit (100), eine Übertragungswelle (110), eine Generatoreinheit (120), eine Drehmoment-Einstellungseinheit (130) und eine automatische Steuereinheit (140) umfasst, wobei die Wellenenergie-Nutzbarmachungseinheit (100) dafür eingerichtet ist, die Bewegungsenergie, die durch die Bewegung der Meereswellen erzeugt wird, nutzbar zu machen, und die Übertragungswelle (110) dafür vorgesehen ist, die Bewegungsenergie, die durch die Wellenenergie-Nutzbarmachungseinheit (100) nutzbar gemacht wurde, an die Generatoreinheit (120) zu übertragen, und wobei die Generatoreinheit (120) dafür eingerichtet ist, die von der Übertragungswelle (110) übertragene Energie zu empfangen und in Elektrizität umzuwandeln, und die Drehmoment-Einstellungseinheit (130) derart auf der Übertragungswelle (110) angeordnet ist, dass das Drehmoment letzterer eingestellt wird, und wobei die automatische Steuereinheit (140) einen Mikroprozessor (141) und eine Meerwasserbewegungs-Sensoreinheit (142) aufweist, so dass die Aktivierung der Generatoreinheit (120) gesteuert und das Drehmoment der Übertragungswelle (110) gemäß der Bewegung des Meerwassers eingestellt wird,
**dadurch gekennzeichnet, dass** die Generatoreinheit (120) zwei Generatoren mit unterschiedlichen Wattzahlen umfasst, wobei die automatische Steuereinheit (140), wenn sich die Meereswellen in kleineren Amplituden bewegen, nur den Generator mit der kleineren Wattzahl aktivieren wird, um eine höhere Stromerzeugungseffizienz bei kleinerem Drehmoment zu erreichen, und die automatische Steuereinheit (140), wenn sich die Meereswellen in größeren Amplituden bewegen, den Generator mit der größeren Wattzahl aktivieren wird, um eine höhere Stromerzeugungseffizienz bei größerem Drehmoment zu erreichen, und die automatische Steuereinheit (140), wenn sich die Meereswellen in noch größeren Amplituden bewegen, beide Generatoren aktivieren wird.

2. System nach Anspruch 1, wobei die Wellenenergie-Nutzbarmachungseinheit (100) eine Schwimmeinheit (101), eine zentrale Kugelgewindespindel (102) oder eine zentrale Zahnstange (105), ein Kegelrad (103) und zwei unidirektionale Kegelradstücke (104) aufweist, **dadurch gekennzeichnet, dass** die Schwimmeinheit (101) mit einer zentralen Kugelgewindespindel (102) oder einer zentralen Zahnstange (105) verbunden ist und die zentrale Kugelgewindespindel (102) mit einem Kegelrad (103) verbunden ist, das mit den zwei unidirektionalen Kegelradstücken (104) in Eingriff steht und diese antreibt, und **dadurch gekennzeichnet, dass** die zwei unidirektionalen Kegelradstücke (104) derart mit der Übertragungswelle (110) gekoppelt sind, dass sich die Schwimmeinheit (101) mit dem Meerwasser (30) auf und ab bewegt, wobei sich die zwei unidirektionalen Kegelradstücke (104) in entgegengesetzte Richtungen bewegen, was die Übertragungswelle (110) veranlasst, sich in einer einzelnen Richtung zu drehen, um die Generatoreinheit (120) anzutreiben.

3. System nach Anspruch 1, wobei beide Generatoren kernlose Scheibengeneratoren sind.

4. System nach Anspruch 1, wobei die Generatoreinheit (120) zwei Generatoren mit unterschiedlichen Wattzahlen umfasst: einen 200kW-Generator und einen 300kW-Generator, **dadurch gekennzeichnet, dass** die automatische Steuereinheit (140) bei einer Meereswellenhöhe von weniger als 1,5 Meter nur den 200kW-Generator aktivieren wird, und **dadurch gekennzeichnet, dass** die automatische Steuereinheit (140) bei einer Meereswellenhöhe zwischen 1,5 und 3,0 Metern nur den 300kW-Generator aktivieren wird, und **dadurch gekennzeichnet, dass** die automatische Steuereinheit (140) bei einer Wellenhöhe, die 3,0 Meter übersteigt, sowohl den 200kw- als auch den 300kW-Generator aktivieren wird.

5. System nach Anspruch 1, wobei die Drehmoment-Einstellungseinheit (130) eine Vorrichtung (131) zum stufenlosen Variieren des Drehmoments oder eine Einheit zum Erhöhen der U/min ist und wobei an die Übertragungswelle (110) ein Drehmomentmesser (143) montiert und dafür eingerichtet ist, die Drehmomentwerte der Übertragungswelle (110) zu messen und die numerischen Werte an die automatische Steuereinheit (140) weiterzuleiten, die dafür eingerichtet ist, wiederum die U/min der Übertragungswelle (110) automatisch einzustellen.

6. System nach Anspruch 5, wobei die automatische Steuereinheit (140) mit einem elektronischen Stabilisator (144) versehen ist, der elektrisch mit der Drehmoment-Einstellungseinheit (130) gekoppelt und dafür eingerichtet ist, die U/min der Drehmoment-Einstellungseinheit (130) zu stabilisieren.

7. System nach Anspruch 1, wobei die Meerwasserbewegungs-Sensoreinheit (142) eine Schwimmeinheit (1421) zum Erfassen von Meerwasser-Bewegungsdaten ist, die dafür eingerichtet ist, Bewegungsdaten von Meerwasser (30) zu erfassen.

8. System nach Anspruch 1, wobei die Meerwasserbewegungs-Sensoreinheit (142) ein Linearwegsensor (1422) ist, der dafür eingerichtet ist, die vertikalen Wegamplituden des Meerwassers (30) zu messen und aufzuzeichnen.

9. System nach Anspruch 1, wobei die Meerwasserbewegungs-Sensoreinheit (142) ein Ultraschall-Wellenhöhenmesser oder ein Laser-Wellenhöhenmesser (1423) ist, der Ultraschall- oder Lasersignale verwendet, um die vertikalen Wegamplituden des Meerwassers (30) zu messen.

## Revendications

1. Système d'alimentation électrique houlomoteur-éolien mutuellement complémentaire pour la production continue d'énergie, comprenant :
un module d'énergie cinétique des vagues (10), qui est disposé sur/dans une mer et est adapté pour produire de l'électricité par l'intermédiaire du mouvement d'eau de mer (30), l'électricité ainsi produite étant combinée à un dispositif de production d'énergie éolienne (20) pour la production continue d'énergie, et
le module d'énergie cinétique des vagues (10) comprenant une unité de collecte d'énergie des vagues (100), un arbre de transmission (110), une unité de générateur (120), une unité de réglage de couple (130) et une unité de commande automatique (140), l'unité de collecte d'énergie des vagues (100) étant adaptée pour collecter l'énergie cinétique produite par l'intermédiaire du mouvement de vagues marines et l'arbre de transmission (110) étant destiné à transmettre l'énergie cinétique colletée par l'unité de collecte d'énergie des vagues (100) à l'unité de générateur (120), et l'unité de générateur (120) étant adaptée pour recevoir l'énergie cinétique transmise par l'arbre de transmission (110) et la convertir en électricité et l'unité de réglage de couple (130) étant disposée sur l'arbre de transmission (110) de façon à régler le couple de ce dernier, et l'unité de commande automatique (140) ayant un microprocesseur (141) et une unité de capteur de mouvement d'eau de mer (142) de façon à commander l'activation de l'unité de générateur (120) et régler le couple de l'arbre de transmission (110) en fonction du mouvement de l'eau de mer ;
**caractérisé par le fait que** l'unité de générateur (120) comprend deux générateurs ayant des puissances différentes, lorsque des vagues marines se déplacent à des amplitudes plus faibles l'unité de commande automatique (140) activant uniquement le générateur avec la puissance plus petite de façon à obtenir un rendement de production d'énergie plus élevé à des couples plus faibles, et lorsque des vagues marines se déplacent à des amplitudes plus grandes l'unité de commande automatique (140) commutant pour activer le générateur avec la puissance plus élevée de façon à obtenir un rendement de production d'énergie plus élevé à des couples plus élevés, et lorsque des vagues marines se déplacent à des amplitudes encore plus grandes, l'unité de commande automatique (140) activant les deux générateurs.

2. Système selon la revendication 1, dans lequel l'unité de collecte d'énergie des vagues (100) a une unité de flotteur (101), une vis à billes centrale (102) ou une tige dentée centrale (105), un engrenage conique (103) et deux éléments d'engrenage conique unidirectionnels (104), **caractérisé par le fait que** l'unité de flotteur (101) est reliée à une vis à billes centrale (102) ou une tige dentée centrale (105) et la vis à billes centrale (102) est reliée à un engrenage conique (103), qui s'engage avec et entraîne les deux éléments d'engrenage conique unidirectionnels (104), et **caractérisé par le fait que** les deux éléments d'engrenage conique unidirectionnels (104) sont reliés à l'arbre de transmission (110) de telle sorte que, lorsque l'unité de flotteur (101) se déplace vers le haut et vers le bas avec l'eau de mer (30), les deux éléments d'engrenage conique unidirectionnels (104) se déplacent dans des directions opposées, ce qui amène l'arbre de transmission (110) à tourner dans une seule direction pour entraîner l'unité de générateur (120).

3. Système selon la revendication 1, dans lequel les deux générateurs sont des générateurs du type à disque sans noyau.

4. Système selon la revendication 1, dans lequel l'unité de générateur (120) comprend deux générateurs avec des puissances différentes : un générateur de 200 KW et un générateur de 300 KW, **caractérisé par le fait que**, lorsque la hauteur de vagues marines est inférieure à 1,5 mètre, l'unité de commande automatique (140) active uniquement le générateur de 200 KW, et **caractérisé par le fait que**, lorsque la hauteur de vagues marines est comprise entre 1,5 et 3,0 mètres, l'unité de commande automatique (140) active uniquement le générateur de 300 KW, et **caractérisé par le fait que**, lorsque la hauteur de vagues dépasse 3,0 mètres, l'unité de commande automatique (140) active les générateurs de 200 KW et de 300 KW.

5. Système selon la revendication 1, dans lequel l'unité de réglage de couple (130) est un dispositif de variation de couple continue (131) ou un dispositif d'amélioration de vitesse de rotation, et un dispositif de mesure de couple (143) est monté sur l'arbre de transmission (110) et est adapté pour mesurer les valeurs de couple de l'arbre de transmission (110) et transférer les valeurs numériques à l'unité de commande automatique (140), qui est adaptée pour régler automatiquement, à son tour, la vitesse de rotation de l'arbre de transmission (110).

6. Système selon la revendication 5, dans lequel l'unité de commande automatique (140) comporte un stabilisateur électronique (144), qui est relié électriquement à l'unité de réglage de couple (130) et adapté pour stabiliser la vitesse de rotation de l'unité de réglage de couple (130).

7. Système selon la revendication 1, dans lequel l'unité de capteur de mouvement d'eau de mer (142) est une unité de flotteur de collecte de données de mouvement d'eau de mer (1421), qui est adaptée pour collecter des données de mouvement d'eau de mer (30).

8. Système selon la revendication 1, dans lequel l'unité de capteur de mouvement d'eau de mer (142) est un capteur de déplacement linéaire (1422), qui est adapté pour mesurer et enregistrer les déplacements verticaux d'eau de mer (30).

9. Système selon la revendication 1, dans lequel l'unité de capteur de mouvement d'eau de mer (142) est un dispositif de mesure de hauteur de vagues ultrasonore ou un dispositif de mesure de hauteur de vague à laser (1423), qui utilise des signaux ultrasonores ou laser pour mesurer les déplacements verticaux d'eau de mer (30).
